(19) Europäisches Patentamt
European Patent Office
Office européen des brevets

(11) Publication number: 0 230 603 B1

(12) # EUROPEAN PATENT SPECIFICATION

(45) Date of publication of patent specification: 13.03.91

(51) Int. Cl.$^5$: C08G 64/00, C08G 65/44, C08G 81/00

(21) Application number: 86117439.9

(22) Date of filing: 15.12.86

(54) **Method for preparing block polyphenylene ether-polycarbonates.**

(30) Priority: 19.12.85 US 810613

(43) Date of publication of application: 05.08.87 Bulletin 87/32

(45) Publication of the grant of the patent: 13.03.91 Bulletin 91/11

(84) Designated Contracting States: DE FR GB IT NL

(56) References cited:
EP-A- 0 162 379
DE-A- 3 211 636
US-A- 3 875 256

POLYMER JOURNAL, vol. 17, no. 3, 1985, pages 509-516, Tokyo, JP; G. ROKICKI et al.: "Poly(ether-carbonate)s from Diphenolates, Cyclic Carbonates, and Dihalo Compounds"

(73) Proprietor: GENERAL ELECTRIC COMPANY
1 River Road
Schenectady New York 12305(US)

(72) Inventor: Evans, Thomas Lane
3 Earl Court
Clifton Park New York 12065(US)

(74) Representative: Catherine, Alain et al
General Electric France Service de Propriété Industrielle 18 Rue Horace Vernet
F-92136 Issy-Les-Moulineaux Cedex(FR)

EP 0 230 603 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the preparation of block polyphenylene ether-polycarbonates, and more particularly to an improved method for such preparation which may be carried out in solution or under melt processing conditions.

Block polyphenylene ether-polycarbonates useful as molding compositions and the like are known in the art and are described, for example, in U.S - A - 4,374,233 and 4,436,876. According to those patents, such block copolymers are prepared interfacially by combining polyphenylene ethers (also known as polyphenylene oxides) with conventional polycarbonate-forming reagents including a dihydroxyaromatic compound, an amine catalyst, an aqueous alkali metal hydroxide and an organic solvent, and adding a carbonyl halide such as phosgene. Such interfacial processes are often cumbersome and are impossible to carry out under homogeneous conditions or in a mold.

A principal object of the present invention, therefore, is to provide a novel method for the preparation of block polyphenylene ether-polycarbonates.

A further object is to provide a method which can be effected under homogeneous conditions in the melt or in solution.

Accordingly, the present invention is a method for preparing a block polyphenylene ether-polycarbonate which comprises reacting, at a temperature within the range of 175 to 300° C, a composition comprising at least one cyclic polycarbonate oligomer with at least one salt of a polyphenylene ether.

The cyclic polycarbonate oligomers used in the method of this invention are characterized by structural units having the formula

(I) $$-O-R^1-O-\overset{O}{\overset{\|}{C}}-$$

wherein each $R^1$ is independently a divalent aliphatic, alicyclic or aromatic radical.

In formula (I), the $R^1$ values may be different but usually the same, and may be aliphatic, alicyclic, aromatic or mixed; those which are aliphatic or alicyclic generally contain up to about 8 carbon atoms. Suitable $R^1$ values include ethylene, propylene trimethylene, tetramethylene, hexamethylene, dodecamethylene, l,4-(2-butenylene), l,l0-(2-ethyldecylene, l,3-cyclopentylene, l,3-cyclohexylene, l,4-cyclohexylene, m-phenylene, p-phenylene, 4,4'-biphenylene, 2,2-bis(4-phenylene)propane, benzene-l,4-dimethylene (which is a vinylog of the ethylene radical and has similar properties) and similar radicals such as those which correspond to the dihydroxy compounds disclosed by name or formula (generic or specific) in U.S - A - 4,2l7,438. so included are radicals containing non-hydrocarbon moieties. These may be substituents such as chloro, nitro, and alkoxy, and also linking radicals such as thio, sulfoxy, sulfone, ester, amide, ether and carbonyl. Most often, however, all $R^1$ radicals are hydrocarbon radicals.

Preferably at least and more preferably at least 80% of the total number of $R^1$ values, and most desirably all of said $R^1$ values, are aromatic. The aromatic $R^2$ radicals preferably have the formula

(II) $$-A^1-Y-A^2-$$

wherein each of $A^1$ and $A^2$ is a single-ring divalent aromatic radical and Y is a bridging radical in which one or two atoms separate $A^1$ from $A^2$. The free valence bonds in formula (II) are usually in the meta or para positions of $A^1$ and $A^2$ in relation to Y. Such $R^1$ values may be considered as being derived from bisphenols of the formula $HO-A^1-Y-A^2-OH$. Frequent reference to bisphenols will be made hereinafter, but it should be understood that $R^1$ values derived from suitable compounds other than bisphenols may be employed as appropriate.

In formula (II), the $A^1$ and $A^2$ values may be unsubstituted phenylene or substituted derivatives thereof, illustrative substituents (one or more) being alkyl, alkenyl (e.g. crosslinkable-graftable moieties such as vinyl and allyl), halo (especially chloro and/or bromo), nitro, and alkoxy.

Unsubstituted phenylene radicals are preferred. Both $A^1$ and $A^2$ are preferably p-phenylene, although both may be o- or m-phenylene or one o- or m-phenylene and the other p-phenylene.

The bridging radical, Y, is one in which one or two atoms, preferably one, separate $A^1$ from $A^2$ . It is most often a hydrocarbon radical and particularly a saturated radical such as methylene, cyclohexylmethylene, 2-[2.2.l]-bicycloheptylmethylene, ethylene, isopropylidene, neopentylidene, cyclohexylidene, cyclopentadecylidene, cyclododecylidene or adamantylidene, especially a gem-alkylene radical. Also included, however, are unsaturated radicals and radicals which are entirely or partially composed of atoms other than carbon and hydrogen. Examples of such radicals are 2,2-dichloroethylidene, carbonyl, thio and sulfone. For reasons of availability and particular suitability for the purposes of this invention, the preferred radical of formula (III) is the 2,2-bis(4-phenylene)propane radical, which is derived from bisphenol A and in which Y is isopropylidene and $A^1$ and $A^2$ are each p-phenylene.

The cyclic polycarbonate oligomers include dimers, trimers and tetramers of the type disclosed in the following U.S. patents:

| | |
|---|---|
| 3,155,683 | 3,386,954 |
| 3,274,214 | 3,422,119. |

Also included, and usually preferred, are cyclic pclycarbonate oligomer mixtures of the type disclosed in EP-A-162 379.

The cyclic oligomer mixtures consist essentially of oligomers having degrees of polymerization from 2 to about 30 and preferably to 20, with a major proportion being up to l2 and a still larger proportion up to l5. Since they are mixtures, these compositions have relatively low melting points as compared to single compounds such as the corresponding cyclic trimer. The cyclic oligomer mixtures are generally liquid at temperatures above 300° C and most often at temperatures above 225° C.

The oligomer mixtures useful in this invention contain very low proportions of linear oligomers. In general, no more than 10% by weight, and most often no more than 5% of such linear oligomers are present. The mixtures also contain low percentages (frequently less than 30% and preferably no higher than 20%) of polymers (linear or cyclic) having a degree of polymerization greater than 30. Such polymers are frequently identified hereinafter as "high polymer". These properties, coupled with the relatively low melting points and viscosities of the cyclic oligomer mixtures, contribute to their utility in the preparation of the composites of this invention.

These mixtures may be prepared by a condensation reaction involving bishaloformates having the formula $R^1(OCOZ)_2$, wherein $R^1$ is as defined hereinabove and Z is chlorine or bromine. The condensation reaction typically takes place interfacially when a solution of said bishaloformate in a substantially non-polar organic liquid is contacted with a tertiary amine from a specific class and an aqueous alkali metal hydroxide solution.

In one method for preparing the cyclic oligomer mixture, at least one such bishaloformate is contacted with at least one oleophilic aliphatic or heterocyclic tertiary amine and an aqueous alkali metal hydroxide solution having a concentration of 0.l-l0 M, said contact being effected under conditions resulting in high dilution of bishaloformate, or the equivalent thereof, in a substantially non-polar organic liquid which forms a two-phase system with water; and subsequently, the resulting cyclic oligomer mixture is separated from at least a portion of the high polymer and insoluble material present.

While the z values may be chlorine or bromine, the bischloroformates, in which Z is chlorine, are most readily available and their use is therefore preferred. (Frequent reference to bischloroformates will be made hereinafter, but it should be understood that other bishaloformates may be substituted therefor as appropriate.)

The tertiary amines useful in the preparation of the cyclic polycarbonate oligomers generally comprise those which are oleophilic (i.e., which are soluble in and highly active in organic media, especially those used in the oligomer preparation method of this invention), and more particularly those which are useful for the formation of polycarbonates. Reference is made, for example, to the tertiary amines disclosed in the aforementioned U.S. Patent 4,2l7,438 and in U.S. Patent 4,368,3l5. They include aliphatic amines such as triethylamine; tri-n-propylamine, diethyl-n-propylamine and tri-n-butylamine and highly nucleophilic heterocyclic amines such as 4-dimethylaminopyridine (which, for the purposes of this invention, contains only one active amine group). The preferred amines are those which dissolve preferentially in the organic phase of the reaction system; that is, for which the organic-aqueous partition coefficient is greater than l. This is true because intimate contact between the amine and the bischloroformate is essential for the formation of the cyclic oligomer mixture. For the most part, such amines contain at least 6 and preferably 6 to l4 carbon atoms.

The most useful amines are trialkylamines containing no branching on the carbon atoms in the l- and 2-positions. Especially preferred are tri-n-alkylamines in which the alkyl groups contain up to 4 carbon atoms.

Triethylamine is most preferred by reason of its particular availability, low cost, and effectiveness in the preparation of products containing low percentages of linear oligomers and high polymers.

The aqueous alkali metal hydroxide solution is most often lithium, sodium or potassium hydroxide, with sodium hydroxide being preferred because of its availability and relatively low cost. The concentration of said solution is 0.2 to l0 M and preferably no higher than 3 M.

The fourth essential component in the cyclic oligomer preparation method is a substantially non-polar organic liquid which forms a two-phase system with water. The identity of the liquid is not critical, provided it possesses the stated properties. Illustrative liquids are aromatic hydrocarbons such as toluene and xylene; substituted aromatic hydrocarbons such as chlorobenzene, o-dichlorobenzene and nitrobenzene; chlorinated aliphatic hydrocarbons such as chloroform and methylene chloride; and mixtures of the foregoing with ethers such as tetrahydrofuran.

To prepare the cyclic oligomer mixture according to the above-described method, the reagents and components are maintained in contact under conditions wherein the bis-chloroformate is present in high dilution, or equivalent conditions. Actual high dilution conditions, requiring a large proportion of organic liquid, may be employed but are usually not preferred for cost and convenience reasons. Instead, simulated high dilution conditions known to those skilled in the art may be employed. For example, in one embodiment of the method the bischloroformate or a mixture thereof with the amine is added gradually to a mixture of the other materials. It is within the scope of this embodiment to incorporate the amine in the mixture to which the bischloroformate is added, or to add it gradually, either in admixture with the amine or separately. Continuous or incremental addition of the amine is frequently preferred, whereupon the cyclic oligomer mixture is obtained in relatively pure form and in high yield.

Although addition of the bischloroformate neat (i.e., without solvents) is within the scope of this embodiment, it is frequently inconvenient because many bischloroformates are solids. Therefore, it is preferably added as a solution in a portion of the organic liquid. The proportion of organic liquid used for this purpose is not critical 25 to 75% by weight, and especially 40 to 60%, is preferred.

The reaction temperature is generally in the range of 0 to 50 °C. It is more often 0 to 40 °C and preferably 20 to 40 °C.

For maximization of the yield and purity of cyclic oligomers as opposed to high polymer and insoluble and/or interactable by-products, it is preferred to use not more than 0.7 mole of bischloroformate per liter of organic liquid present in the reaction system, including any liquid used to dissolve said bischloroformate. Preferably, 0.003 to 0.6 mole of bischloroformate is used. It should be noted that this is not a molar concentration in the organic liquid when the bischloroformate is added gradually, since it is consumed as it is added to the reaction system.

The molar proportions of the reagents constitute another important feature for yield and purity maximization. The preferred molar ratio of amine to bischloroformate is 0.l to l.0:l and most often 0.2 to 0.6:l. The preferred molar ratio of alkali metal hydroxide to bischloroformate is l.5 to 3:l and most often 2 to 3:l.

Step II of the cyclic oligomer preparation method is the separation of the oligomer mixture from at least a portion of the high polymer and insoluble material present. When other reagents are added to the alkali metal hydroxide and the preferred conditions and material proportions are otherwise employed, the cyclic oligomer mixture (obtained as a solution in the organic liquid) typically contains less than 30% by weight and frequently less than 20% of high polymer and insoluble material. When all of the preferred conditions are employed, the product may contain l0% or even less of such material. Depending on the intended use of the cyclic oligomer mixture, the separation step may then be unnecessary.

Therefore, a highly preferred method for preparing the cyclic oligomer mixture comprises the single step of conducting the reaction using as the amine at least one aliphatic or heterocyclic tertiary amine which, under the reaction conditions, dissolves preferentially in the organic phase of the reaction system, and gradually adding bischloroformate, amine and alkali metal hydroxide simultaneously to a substantially non-polar organic liquid or a mixture of said liquid with water, said liquid or mixture being maintained at a temperature in the range of 0 to 50 °C; the amount of bischloroformate used being up to 0.7 mole for each liter of said organic liquid present in the reaction system, and the molar proportions of amine and alkali metal hydroxide to bischloroformate being 0.2 to l:l and 2 to 3:1, respectively; and recovering the cyclic oligomers thus formed.

As in the embodiment previously described, another portion of said liquid may serve as a solvent for the bischloroformate. Addition of each reagent is preferably continuous, but may be incremental for any or all of said reagents.

When a separation step is necessary, the unwanted impurities may be removed in the necessary amounts by conventional operations such as combining the solution with a non-solvent for said impurities.

Illustrative non-solvents include ketones such as acetone and methyl isobutyl ketone and esters such as methyl acetate and ethyl acetate. Acetone is a particularly preferred non-solvent. Recovery of the cyclic oligomers normally means merely separating the same from diluent (by known methods such as vacuum evaporation) and, optionally, from high polymer and other impurities.

The preparation of cyclic oligomer mixtures useful in this invention is illustrated by the following examples. All parts and percentages in the examples herein are by weight unless otherwise indicated. Temperatures are in degrees Celsius. Molecular weights, whenever referred to herein, are weight average unless otherwise indicated and were determined by gel permeation chromatography relative to polystyrene.

Examples 1 to 18

Bisphenol A bischloroformate was reacted with aqueous sodium hydroxide and triethylamine in an organic liquid (chloroform in Example 7, methylene chloride in all other examples) according to the following procedure: The bischloroformate was dissolved in half the amount of organic liquid employed and was added gradually, with slow stirring, to the balance of the reaction mixture. In Examples I to I0 and I2, the triethylamine was all originally present in the reaction vessel; in Examples I4 to I6, it was added gradually at the same time as the bischloroformates; and in Examples II, I3, I7 and I8, it was added incrementally at the beginning of bischloroformate addition and at intervals of 20% during said addition. The amount of sodium hydroxide used was 2.4 moles per mole of bischloroformate. After all the bischloroformate had been added, the mixture was stirred for about 2 minutes and the reaction was quenched by the addition of a slight excess of I M aqueous hydrochloric acid. The solution in the organic liquid was washed twice with dilute aqueous hydrochloric acid, dried by filtration through phase separation paper and evaporated under vacuum. The residue was dissolved in tetrahydrofuran and high polymers were precipitated by addition of acetone.

The reaction conditions for Examples I to I8 are listed in Table I together with the approximate percentage (by weight) of cyclic polycarbonate oligomer present in the product before high polymer precipitation. The weight average molecular weights of the cyclic oligomer mixtures were approximately 1300, corresponding to an average degree of polymerization of about 5.I.

| Example | Bischloroformate amt., mmole/l. org. liquid | Bischloroformate amt., total mmol. | NaOH molarity | Molar ratio, amine: bis-chloroformate | Temperature | Addition time, min. | %oligomer in product |
|---|---|---|---|---|---|---|---|
| 1 | 100 | 2 | 0.313 | 0.5 | 20 | 30 | 97 |
| 2 | 100 | 2 | 0.625 | 0.5 | 20 | 30 | 95 |
| 3 | 100 | 2 | 2.5 | 0.5 | 35 | 55 | 93 |
| 4 | 100 | 2 | 2.5 | 0.5 | 0 | 30 | 77 |
| 5 | 100 | 2 | 2.5 | 0.5 | 20 | 30 | 87 |
| 6 | 100 | 2 | 2.5 | 0.5 | 35 | 30 | 78 |
| 7 | 100 | 2 | 2.5 | 0.5 | 50 | 30 | 88 |
| 8 | 100 | 2 | 2.5 | 0.25 | 20 | 30 | 74 |
| 9 | 100 | 1 | 2.5 | 0.2 | 20 | 15 | 75 |
| 10 | 200 | 4 | 2.5 | 0.5 | 20 | 30 | 88 |
| 11 | 500 | 10 | 2.5 | 0.25 | 25 | 105 | 83 |
| 12 | 500 | 10 | 2.5 | 0.25 | 25 | 105 | 78 |
| 13 | 500 | 10 | 2.5 | 0.25 | 25 | 105 | 83 |
| 14 | 500 | 10 | 2.5 | 0.25 | 25 | 105 | 87 |
| 15 | 500 | 10 | 2.5 | 0.29 | 30 | 90 | 78 |
| 16 | 500 | 10 | 2.5 | 0.25 | 30 | 20 | 75 |
| 17 | 500 | 10 | 2.5 | 0.25 | 40-45 | 105 | 79 |
| 18 | 500 | 10 | 2.5 | 0.4 | 25 | 105 | 79 |

Example I9

Bisphenol A bischloroformate (2.0 mmol) was reacted with aqueous sodium hydroxide and 4-dimethylaminopyridine in methylene chloride. The procedure employed was that of Example I, except that 66,67 mmol of bisphenol A per liter of methylene chloride was employed, the aqueous sodium hydroxide concentration was 5.0 M and the reaction temperature was about 25° C. The product comprised 85% cyclic oligomer.

The second reagent essential to this invention is at least one alkali metal or alkaline earth metal salt of a polyphenylene ether. The polyphenylene ethers are a well known class of polymers widely used in industry, especially as engineering plastics in applications requiring toughness and heat resistance. Since their discovery, they have given rise to numerous variations and modifications all of which are applicable to the present invention; including but not limited to those described hereinafter.

The polyphenylene ethers comprise a plurality of structural units having the formula

(III) 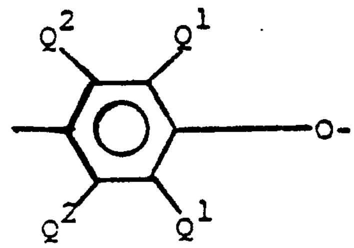

In each of said units independently, each $Q^1$ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl 2-, 3- or 4-methyl-pentyl and the corresponding heptyl groups. Examples of secondary lower alkyl groups are isopropyl, sec-butyl and 3-pentyl. preferably, any alkyl radicals are straight chain rather than branched. Most often, each $Q^1$ is alkyl or phenyl, especially $C_{1-4}$ alkyl, and each $Q^2$ is hydrogen. Suitable polyphenylene ethers are disclosed in a large number of patents.

Both homopolymer and copolymer polyphenylene ethers are included. Suitable homopolymers are those containing, for example, 2,6-dimethyl-l,4-phenylene ether units. Suitable copolymers include random copolymers containing such units in combination with (for example) 2,3,6-trimethyl-l,4-phenylene ether units. Many suitable random copolymers, as well as homopolymers, are disclosed in the patent literature.

Also included are polyphenylene ethers containing moieties which modify properties such as molecular weight, melt viscosity and/or impact strength. Such polymers are described in the patent literature and may be prepared by grafting onto the polyphenylene ether in kown manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

The polyphenylene ether generally has a number average molecular weight within the range of 3,000 to 40,000 and a weight average molecular weight within the range of 20,000 to 60,000, as determined by gel permeation chromatography. Its intrinsic viscosity is most often in the range of 0.2 to 0.6 and preferably 0.35 to 0.6 dl/g, as measured in chloroform at 25° C.

The polyphenylene ethers are typically prepared by the oxidative coupling of at least one corresponding monohydroxyaromatic compound. particularly useful and readily available monohydroxyaromatic compounds are 2,6-xylenol (wherein each $Q^1$ is methyl and each $Q^2$ is hydrogen), whereupon the polymer may be characterized as a poly(2,6-dimethyl-l,4-phenylene ether), and 2,3,6-trimethylphenol (wherein each $Q^1$ and one $Q^2$ is methyl and the other $Q^2$ is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S - A - 3,306,874, 3,306,875, 3,9l4,266 and 4,028,34l. They are usually combinations of cuprous or cupric ions, halide (i.e., chloride, bromide or iodide) ions and at least one amine.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also useful are known cobalt containing catalyst systems. Suitable manganese and cobalt-containing catalyst systems for polyphenylene ether preparation are known in the art by reason of

disclosure in numerous patents and publications.

Many polyphenylene ethers comprise molecules having at least one of the end groups of the formulas

(IV) 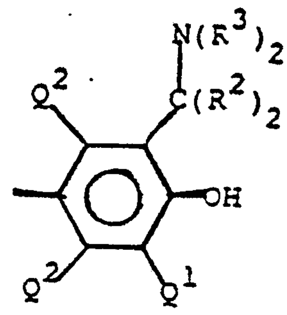 and

(V) 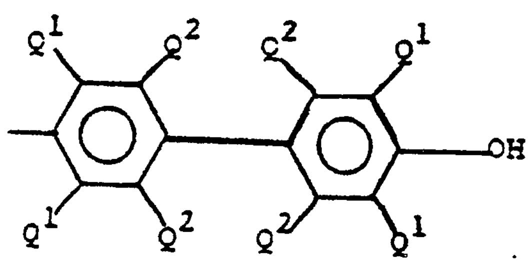

wherein $Q^1$ and $Q^2$ are as previously defined; each $R^2$ is independently hydrogen or alkyl, with the proviso that the total number of carbon atoms in both $R^2$ radicals is 6 or less, and each $R^3$ is independently hydrogen or a $C_{1-16}$ primary alkyl radical. Preferably, each $R^2$ is hydrogen and each $R^3$ is alkyl, especially methyl or n-butyl.

Polymers containing the aminoalkyl-substituted end groups of formula IV may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the α-hydrogen atoms on one or more $Q^1$ radicals. The principal site of reaction is the $Q^1$ radical adjacent to the hydroxy group on the terminal unit of the polymer chain. During further processing and/or blending, the aminoalkyl-substituted end groups may undergo various reactions, probably involving a quinone methide type intermediate of the formula

(VI) 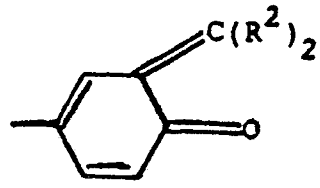

with numerous beneficial effects often including an increase in impact strength and compatibilization with other blend components. Reference is made to U.S - A - 4,054,553, 4,092,294, 4,477,649, 4,477,651 and 4,517,341.

Polymers with 4-hydroxybiphenyl end groups of formula V are typically obtained from reaction mixtures in which a by-product diphenoquinone of the formula

(VII) 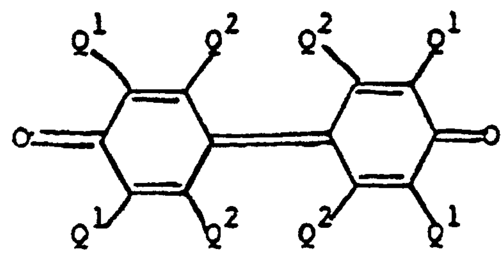

is present, especially in a copper-halide-secondary or tertiary amine system. In this regard, the disclosure of U.S -A-4,234,706, 4,477,649 and 4,482,697 are particularly pertinent. In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight of the polymer, contain end groups having one or frequently both formulas IV and V. Under certain conditions, such as relatively high temperatures, blocks involving groups of formula IV may be relatively unstable. If it is desired to avoid the formation of such end groups, an oxidative coupling catalyst other than one which leads to their formation may be used or the aminoalkyl end groups may be inactivated by chemical treatment. It should be noted, however, that salt formation and the reaction leading to the block polyphenylene ether-polycarbonate may be undergone by hydroxy-containing end groups of a higher degree of stability in the same or different polymer molecules. Therefore, the presence of aminoalkyl end groups does not foreclose the practice of this invention.

It will be apparent to those skilled in the art from the foregoing that the polyphenylene ethers contemplated for use in the present invention include all those presently known, irrespective of variations in structural units or ancillary chemical features.

For the purposes of the present invention, the polyphenylene ether is converted into a salt thereof. The salt may be a metal salt, especially an alkali metal or alkaline earth metal salt such as the lithium, sodium, potassium, magnesium or calcium salts, most often sodium by reason of its availability. It may also be a tetraalkylammonium salt, most often one in which the alkyl groups contain up to 4 carbon atoms and especially a tetramethylammonium salt. The site of salt formation is the terminal hydroxy group(s).

Salt formation may be easily achieved by reacting the polyphenylene ether with a suitable base such as lithium hydroxide, sodium hydroxide, potassium hydroxide, magnesium hydroxide, calcium hydroxide, sodamide, sodium hydride, a sodium alkoxide, tetramethylammonium hydroxide or the like. To ensure quantitative formation of the polyphenylene ether salt, it is frequently advantageous to employ a highly colored basic compound and to titrate the polyphenylene ether by adding said compound until its color persists in the reaction mixture. Suitable highly colored compounds of this type are the alkali metal benzophenone ketyls and alkali metal salts of triphenylmethane disclosed in U.S-A-3,402,l43 and 3,703,564. Formation of the polyphenylene ether salt may generally be conveniently achieved in solution in an organic solvent such as toluene, xylene, chlorobenzene, o-dichlorobenzene or dichlorotoluene.

The polyphenylene ether salt is an effective initiator for polymerization of the cyclic polycarbonate oligomers to high molecular weight linear polycarbonates. In the initiation process, the first carbonate moiety becomes bonded to the polyphenylene ether whereby the desired block copolymer is formed. In order to minimize homopolycarbonate formation, it is generally preferred to preform the polyphenylene ether salt and subsequently to contact it with the cyclic oligomers. However, it is also within the scope of the invention to initially blend the cyclic oligomers with the polyphenylene ether and subsequently to add the desired base.

The reaction between the polyphenylene ether salt and the cyclic oligomers typically takes place at a temperature within the range of l75 to 300 °C, preferably l90 to 260 °C. It may be conducted in solution, typically in a solvent such as those previously described with reference to polyphenylene ether salt formation and advantageously in the same solvent when it boils within the desired reaction range, or in the melt. The choice of proportions of polyphenylene ether and cyclic oligomer may be made as known in the art to produce a block copolymer of the desired stoichiometry and molecular weight range. Most often, the number average molecular weight of the block copolymer, as determined by gel permeation chromatography relative to polystyrene, will be in the range of 5,000 to 75,000 The reaction mixture may also contain an endcapping agent such as diphenyl carbonate or a substituted diphenyl carbonate, in an amount to provide a polycarbonate block of the desired molecular weight.

Following block copolymer formation, the copolymer may be isolated as necessary by known methods. These typically include separation of the block copolymer from any polyphenylene ether homopolymer, most often by dissolving the latter in a suitable solvent such as toluene and separating it from the insoluble block copolymer by filtration.

The block copolymers formed by the method of this invention may be A-B (diblock) or A-B-A (triblock) copolymers, depending on the number and stability of the hydroxy end groups on the polyphenylene ether. Thus, diblock copolymers are formed if the polyphenylene ether is a conventional head-to-tail polymer containing only one hydroxy end group, and may also be formed if one of two hydroxy end groups is an aminoalkyl-substituted group as described hereinabove. On the other hand, triblock copolymers can be obtained by the use of polyphenylene ethers containing two stable hydroxy end groups, such as those prepared by quinone coupling of a conventional head-to-tail polymer.

Since the conversion of the cyclic polycarbonate oligomer to a linear polycarbonate is a "living" polymerization, it is possible to form A-B-C block copolymers by adding a third reactive polymer or precursor thereof after polycarbonate formation has proceeded to the extent desired. Suitable reactive polymers for this purpose are polysiloxanes, polyesters and polyamides. Polyamide- and polyether containing block copolymers may also be prepared by combining the "living" polymer with a reactive lactam such as $\epsilon$-caprolactam or an epoxide such as ethylene oxide or propylene oxide.

The method of this invention is illustrated by the following examples. All parts are by weight. The polyphenylene ether used in these examples was formed by the polymerization of 2,6-xylenol by known methods, using a catalyst comprising chemically combined copper, bromide ion, dimethyl-n-butylamine and di-n-butylamine. It had an intrinsic viscosity of 0.24 dl/g, a weight average molecular weight of 28,850 and a number average weight of 8700. It was shown by analysis to contain about one hydroxy group per polymer chain, with about 50% of the polymer chains having aminoalkyl end groups of formula IV wherein $Q^1$ is methyl, each $Q^2$ is hydrogen, each $R^2$ is hydrogen and each $R^3$ is n-butyl.

Example 20

A solution of 5 parts (4l mmol) of polyphenylene ether in l6 parts of 2,4-dichlorotoluene was dried by distillation and titrated with a 0.00l M solution in tetrahydrofuran of sodium benzophenone ketyl until a blue color persisted. There was then added l0 parts (39 mmol based on structural units) of a cyclic bisphenol A polycarbonate oligomer mixture similar to that of Example l, and an additional 5 parts of 2,4-dichlorotoluene. The mixture was heated to reflux and a substantial increase in viscosity was noted after 5 minutes. Refluxing was continued for l hour, after which the mixture was cooled and the polymer precipitated by pouring into methanol. The crude polymer had a weight average molecular weight of l58,400 and a number average molecular weight of 37,850.

Unreacted polyphenylene ether was removed from the product by stirring with toluene for several days. The toluene-insoluble fraction comprised the desired block polyphenylene ether-polycarbonate; it had a weight average molecular weight of l87,500 and a number average molecular weight of 49,060. It was found to have two glass transition temperatures at l50 and 2l0 °C, and was easily formed into films by pressing.

Example 2l

A sample of the polyphenylene ether sodium salt of Example 20 was precipitated from 2,4-dichlorotoluene by pouring into hexane. A 7.5-part (63 mmol) sample thereof was combined with l5.85 parts (62 mmol) of the cyclic polycarbonate oligomer mixtures of Example 20 and 0.54 part (2.5 mmol) of diphenyl carbonate was added. The mixture was thoroughly blended at 250 °C in a helicone reactor under nitrogen for l0 minutes, and was then dissolved in methylene chloride and reprecipitated by pouring into acetone. The block polyphenylene ether-polycarbonate had a weight average molecular weight of 32,290 and a number average molecular weight of l5,350.

## Claims

**1.** A method for preparing a block polyphenylene ether-polycarbonate characterized in that it comprises reacting, at a temperature within the range of 175 to 300 °C, a composition comprising at least one

cyclic polycarbonate oligomer with at least one salt of a polyphenylene ether.

**2.** A method according to claim I wherein the polyphenylene ether salt is an alkali metal, alkaline earth metal or tetraalkylammonium salt.

**3.** A method according to claim 2 wherein the cyclic polycarbonate oligomer is characterized by structural units having the formula

$$(I) \qquad -O-R^1-O-\overset{O}{\overset{\|}{C}}-$$

wherein each $R^1$ is independently a divalent aliphatic, alicyclic or aromatic radical.

**4.** A method according to claim 3 wherein the polyphenylene ether is a homopoly(2,6-dimethyl-l,4-phenylene) ether.

**5.** A method according to claim 4 wherein a mixture of cyclic polycarbonate oligomers is used.

**6.** A method according to claim 5 wherein each $R^1$ radical has the formula

$$(II) \qquad -A^1-Y-A^2-$$

wherein each of $A^1$ and $A^2$ is a single-ring divalent aromatic radical and y is a bridging radical in which one or two atoms separate $A^1$ from $A^2$.

**7.** A method according to claim 6 wherein each of $A^1$ and $A^2$ is p-phenylene and Y is isopropylidene.

**8.** A method according to claim 7 wherein the polyphenylene ether salt is an alkali metal or alkaline earth metal salt.

**9.** A method according to claim 8 wherein the reaction is conducted at a temperature in the range of l90 to 260 ° C.

**10.** A method according to claim 9 wherein the polyphenylene ether salt is a sodium salt.

**11.** A method according to claim 10 wherein the reaction is conducted in solution.

**12.** A method according to claim l0 wherein the reaction is conducted in the melt.

## Revendications

**1.** procédé pour préparer un polyéther de phénylènepolycarbonate séquencé, caractérisé en ce qu'il comprend la réaction, à une température dans la gamme de l75 à 300 ° C, d'une composition comprenant au moins un oligomère cyclique de polycarbonate avec au moins un sel d'un polyéther de phénylène.

**2.** Procédé selon la revendication l, dans lequel le sel de polyéther de phénylène est un sel de métal alcalin, de métal alcalino-terreux ou de tétraalkylammonium.

**3.** Procédé selon la revendication 2, dans lequel l'oligomère cylique de polycarbonate est caractérisé par des motifs structuraux de formule

(I) 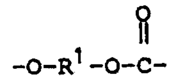

dans laquelle chaque $R^1$ est indépendamment un radical divalent aliphatique, alicyclique ou aromatique.

4. Procédé selon la revendication 3, dans lequel le polyéther de phénylène est un homopoly(éther de 2,6-diméthyl-l,4-phénylène).

5. Procédé selon la revendication 4, dans lequel on utilise un mélange d'oligomères cyliques de polycarbonate.

6. Procédé selon la revendication 5, dans lequel chaque radical $R^1$ a pour formule

$$(II) \qquad -A^1-Y-A^2-$$

dans laquelle chaque $A^1$ et $A^2$ est un radical aromatique divalent monocyclique et Y est un radical de pontage dans lequel un ou deux atomes séparent $A^1$ de $A^2$.

7. Procédé selon la revendication 6, dans lequel chacun de $A^1$ et $A^2$ est un radical p-phénylène et Y est un radical isopropylidène.

8. Procédé selon la revendication 7, dans lequel le sel de polyéther de phénylène est un sel de métal alcalin ou un sel de métal alcalino-terreux.

9. Procédé selon la revendication 8, dans lequel la réaction est effectuée à une température dans la gamme de l90 à 260 ° C.

10. Procédé selon la revendication 9, dans lequel le sel de polyéther de phénylène est un sel de sodium.

11. Procédé selon la revendication l0, dans lequel la réaction est effectuée en solution.

12. Procédé selon la revendication l0, dans lequel la réaction est effectuée en masse fondue.

## Ansprüche

1. Verfahren zur Herstellung eines Blockpolyphenylenäther-polycarbonats gekennzeichnet dadurch, daß es die Umsetzung bei einer Temperatur im Bereich l75 bis 300 ° C einer Zusammensetzung umfaßt, die wenigstens ein zyklisches Polycarbonatoligomer mit wenigstens einem Salz eines Polyphenylenäthers umfaßt.

2. Verfahren nach Anspruch l, worin das Polyphenylenäthersalz ein Alkalimetall, Erdalkalimetall und Tetraalkylammonium Salz ist.

3. Verfahren nach Anspruch 2, worin das zyklische Polycarbonatoligomer gekennzeichnet ist durch Struktureinheiten mit der Formel

(I) 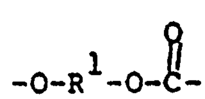

worin jedes $R^1$ unabhängig einen zweiwertigen aliphatischen, alizyklischen oder aromatischen Rest darstellt.

4. Verfahren nach Anspruch 3, worin der Polyphenylenäther ein Homopoly - (2,6-dimethyl-l,4-phenylen)

Äther ist.

5. Verfahren nach Anspruch 4, worin eine Mischung zyklischer Polycarbonat Oligomere verwendet wird.

6. Verfahren nach Anspruch 5, worin jeder $R^1$ Rest die Formel

$$\text{(II)} \qquad -A^1-Y-A^2-$$

aufweist, worin jedes $A^1$ und $A^2$ ein zweiwertiger aromatischer Einringrest ist und Y einen Brückenrest darstellt in welchem $A^1$ von $A^2$ durch ein oder zwei Atome getrennt ist.

7. Verfahren nach Anspruch 6, worin jedes $A^1$ und $A^2$ p-Phenylen ist und Y Isopropyliden ist.

8. Verfahren nach Anspruch 7, worin das Polyphenylen Äthersalz ein Alkalimetall- oder Erdalkalimetallsalz ist.

9. Verfahren nach Anspruch 8, worin die Reaktion bei einer Temperatur im Bereich von l90 bis 260 °C durchgeführt wird.

10. Verfahren nach Anspruch 9, worin das Polyphenyläthersalz ein Natriumsalz ist.

11. Verfahren nach Anspruch l0, worin die Reaktion in Lösung durchgeführt wird.

12. Verfahren nach Anspruch l0, worin die Reaktion in der Schmelze durchgeführt wird.